# EUROPEAN PATENT APPLICATION

(11) **EP 4 714 568 A2**
(43) Date of publication of application: **25.03.2026**
(21) Application number: 25192127.6
(22) Date of filing: 28.07.2025
(51) Int. Cl.: B21D 28/02, B21D 28/26, B21D 53/88, H01M 10/04

(54) **DIE APPARATUS FOR MANUFACTURING SECONDARY BATTERY AND LINK-TYPE KNOCKOUT UNIT FOR DIE APPARATUS**

(30) Priority: 19.09.2024 KR 20240126972
(71) Applicant: SAMSUNG SDI CO., LTD., Yongin-si, Gyeonggi-do 17084 (KR)
(72) Inventor: JANG, Youngjin, 17084 Yongin-si (KR); LEE, Jinhong, 17084 Yongin-si (KR); CHOI, JungHun, 17084 Yongin-si (KR)
(74) Representative: Marks & Clerk LLP

(57) **Abstract**

The present disclosure relates to a die apparatus for manufacturing a secondary battery and a link-type knockout unit for the die apparatus. The die apparatus for manufacturing a secondary battery includes a lower die that supports an electrode plate and has one or more scrap discharge holes, an upper die positioned above the lower die and including a punch corresponding to each of the scrap discharge holes, and a knockout unit including a pad vertically moving inside the scrap discharge hole and a pad support that supports the pad upward and allows the pad to apply a reaction force corresponding to a downward pressure of the punch to a bottom surface of the electrode plate when the punch moves downward.

## Description

### BACKGROUND

### 1. Field

The present disclosure relates to a die apparatus manufacturing an electrode plate of a secondary battery and a knockout unit applied to the die apparatus.

### 2. Description of Related Art

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

The positive or negative electrode plate can be manufactured through coating, rolling, slitting, and notching processes. In the notching process, electrode plates are manufactured by cutting unnecessary parts of a substrate using a shearing die and forming electrode tabs. The die is installed on a pair of punches and dies that form the bottom and tabs of the substrate, and press equipment is used for operating the punches and die.

However, in the case of conventional dies, depending on the strength and characteristics of electrode plates during punching processing, a sheared portion can be torn off. Accordingly, precision of the electrode plate is substantially reduced.

The information disclosed in this Background section is for enhancement of understanding of the background of the present disclosure. The section may contain information that does not constitute related (or prior) art.

### SUMMARY

The present disclosure is directed to providing a die apparatus for manufacturing a secondary battery and a link-type knockout unit for a die apparatus, in which shearing support strength of a substrate part is increased by holding and compressing a processing target, thereby providing products with precise dimensions without punching defects.

Embodiments of the present disclosure provide a die apparatus for manufacturing a secondary battery including a lower die that supports an electrode plate and has one or more scrap discharge holes, an upper die installed above the lower die and having a punch corresponding to each of the scrap discharge holes, and a knockout unit having a pad installed to vertically move inside the scrap discharge hole and a pad support that supports the pad upward and allows the pad to apply a reaction force corresponding to a downward pressure of the punch to a bottom surface of the electrode plate when the punch moves downward.

Embodiments of the present disclosure provide an apparatus including: a lower die configured to support an electrode plate, the lower die comprising a scrap discharge hole; an upper die positioned above the lower die, the upper die comprising a punch corresponding to the scrap discharge hole; and a knockout unit including: a pad configured to be vertically movable within the scrap discharge hole; and a pad support configured to support the pad upward and to allow the pad to apply a reaction force corresponding to a downward pressure of the punch to a bottom surface of the electrode plate upon the punch moving downward.

In an embodiment, the pad includes a pressing surface portion configured to press the bottom surface of the electrode plate.

In an embodiment, a lifting guide surface is positioned on an inner wall surface of the scrap discharge hole, the lifting guide surface configured to guide vertical movement of the pad, and wherein the pad further includes a slider portion supported by the lifting guide surface.

In an embodiment, the pad further includes a discharge inclined surface portion configured to guide discharge of a punched scrap.

In an embodiment, the lower die further includes a unit accommodation space opening toward the scrap discharge hole and accommodating a part of the knockout unit.

In an embodiment, the pad support includes: a shaft fixed to a lower portion of the pad within the scrap discharge hole and extending downward; a link mechanism positioned inside the unit accommodation space and linked to the shaft, the link mechanism implementing vertical movement of the shaft; and an elastic support configured to provide an elastic force to the link mechanism to support the shaft upward.

In an embodiment, the link mechanism includes: an A link and a B link each connected to an upper portion and a lower portion of the shaft in a vertical direction via a link pin and extend toward the unit accommodation space; and a link body positioned in the unit accommodation space and connected to the A link and the B link via the link pin, the link body configured to maintain the A link and the B link to be parallel to each other.

In an embodiment, the elastic support is a B link spring positioned between the link body and the B link.

In an embodiment, the A link includes a link hole vertically passing through the A link, wherein the lower die further includes a female screw hole corresponding to the link hole, and the elastic support includes a through screw coupled to the female screw hole through the link hole and includes an A-link spring pressed by the through screw to elastically support the A link upward.

In an embodiment, the link hole includes a stopper, and wherein the A-link spring is positioned between the stopper and a head portion of the through screw.

Embodiments of the present disclosure provide a link-type knockout unit for a die apparatus installed in a lower die of a die apparatus including the lower die supporting an electrode plate and having one or more scrap discharge holes and an upper die installed above the lower die and having a punch corresponding to each of the scrap discharge holes, and applies a reaction force corresponding to a downward pressure of the punch to a bottom surface of the electrode plate on the scrap discharge hole when the punch moves downward so that the electrode plate is compressed in a thickness direction.

Embodiments of the present disclosure provide a knockout unit for an apparatus including a lower die and an upper die, the lower die configured to support an electrode plate, the lower die including a scrap discharge hole, the upper die positioned above the lower die, and the upper die including a punch corresponding to the scrap discharge hole, wherein the knockout unit is configured to apply a reaction force corresponding to a downward pressure of the punch to a bottom surface of the electrode plate upon the punch moving downward.

In an embodiment, the knockout unit includes: a pad configured to be vertically movable within the scrap discharge hole; and a pad support configured to support the pad upward and allows the pad to apply the reaction force.

In an embodiment, the electrode plate includes a coated portion in which a substrate is coated with an active material and an uncoated portion in which the substrate is exposed, and wherein an upper end portion of the pad includes a pressing surface portion configured to be in contact with a bottom surface of the coated portion and configured to press the coated portion.

In an embodiment, a lifting guide surface is positioned on an inner wall surface of the scrap discharge hole, the lifting guide surface configured to guide vertical movement of the pad, and wherein the pad further includes a slider portion supported by the lifting guide surface.

In an embodiment, the pad further comprises a discharge inclined surface portion configured to guide discharge of a punched scrap.

In an embodiment, the lower die further comprises a unit accommodation space opening toward the scrap discharge hole accommodating a part of the knockout unit.

In an embodiment, the pad support includes: a shaft fixed to a lower portion of the pad within the scrap discharge hole and extending downward; a link mechanism positioned inside the unit accommodation space and linked to the shaft, the link mechanism implement a vertical movement of the shaft; and an elastic support configured to provide an elastic force to the link mechanism to support the shaft upward.

In an embodiment, the link mechanism includes: an A link and a B link each connected to an upper portion and a lower portion of the shaft in a vertical direction via a link pin and extend toward the unit accommodation space; and a link body positioned in the unit accommodation space and connected to the A link and the B link via the link pin, the link body configured to maintain the A link and the B link to be parallel to each other.

In an embodiment, the elastic support is a B link spring positioned between the link body and the B link.

In an embodiment, the A link includes a link hole vertically passing through the A link, wherein the lower die further includes a female screw hole corresponding to the link hole, and the elastic support includes a through screw coupled to the female screw hole through the link hole and comprises an A-link spring pressed by the through screw to elastically support the A link upward.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic view showing an electrode assembly of a secondary battery according to embodiments of the present disclosure;
FIG. 2 shows an interior of a pouch-type battery to which the electrode assembly of FIG. 1 is applied according to embodiments of the present disclosure;
FIG. 3 is a cross-sectional view of a cylindrical battery according to embodiments of the present disclosure;
FIG. 4 is a perspective view showing an exterior of a prismatic battery according to embodiments of the present disclosure;
FIG. 5 is a cross-sectional view along line A-A in FIG. 4 according to embodiments of the present disclosure;
FIG. 6 shows a process of punching an electrode plate using a die apparatus according to embodiments of the present disclosure;
FIG. 7 shows a structure of a die apparatus for manufacturing a secondary battery according to embodiments of the present disclosure;
FIG. 8 shows a process of punching the electrode plate using the die apparatus shown in FIG. 7 according to embodiments of the present disclosure;
FIG. 9 shows a process of punching the electrode plate using the die apparatus shown in FIG. 7 according to embodiments of the present disclosure;
FIG. 10 shows a process of punching the electrode plate using the die apparatus shown in FIG. 7 according to embodiments of the present disclosure;
FIG. 11 is a partial cross-sectional view showing a mounting structure of a knockout unit applied to a lower die of FIG. 7 according to embodiments of the present disclosure;
FIG. 12 shows a configuration of the knockout unit according to embodiments of the present disclosure;
FIG. 13 shows a configuration of the knockout unit according to embodiments of the present disclosure;
FIG. 14 shows a configuration of the knockout unit according to embodiments of the present disclosure;
FIG. 15 shows a configuration of the knockout unit according to embodiments of the present disclosure;
FIG. 16 shows an operation of the knockout unit illustrated in FIG. 12 according to embodiments of the present disclosure;
FIG. 17 shows an operation of the knockout unit illustrated in FIG. 12 according to embodiments of the present disclosure;
FIG. 18 shows a knockout unit according to embodiments of the present disclosure; and
FIG. 19 shows a knockout unit according to embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

The embodiments described herein can be explained with reference to cross-sectional views and/or plan views as example views of the present disclosure. In the figures, dimensions of the various elements, layers, etc. may be exaggerated for clarity of illustration. Thus, regions presented as an example in the drawings have general properties, and shapes of the example areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and shown for example herein include complementary embodiments thereof. The same reference numerals designate the same elements.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

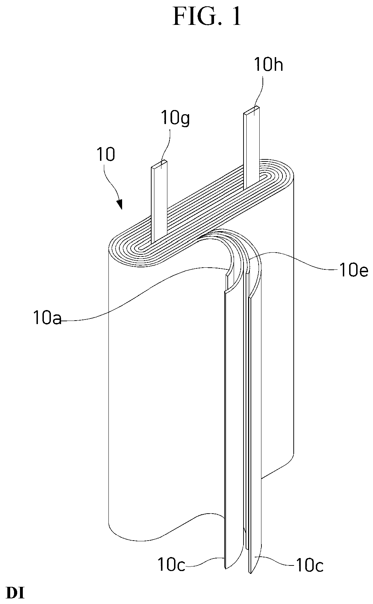

FIG. 1 schematically shows an electrode assembly 10 of a secondary battery including an electrode plate manufactured using a die apparatus according to embodiments of the present disclosure.

In some embodiments, the electrode assembly 10 may be formed by winding a first electrode plate 10a, a separator 10c, and a second electrode plate 10e formed in a plate or sheet shape. In some embodiments, the electrode assembly 10 may be a stacked type. The shape of the electrode assembly 10 is not limited in the present disclosure. In some embodiments, the electrode assembly 10 may be a Z-stack electrode assembly in which the first electrode plate and the second electrode plate are inserted on both sides of a separator folded in a Z shape.

In an embodiment, one or more electrode assemblies 10 may be stacked (e.g., arranged) such that longitudinal sides of the electrode assemblies are adjacent to each other and accommodated in a case. The number of electrode assemblies in a case is not limited in the present disclosure. The first electrode plate 10a of the electrode assembly 10 may be configured as a negative electrode and the second electrode plate 10e may be configured as a positive electrode, and vice versa.

The first electrode plate 10a may be formed by applying (e.g., coating or depositing) a first electrode active material, such as graphite or carbon, onto a first electrode substrate formed of a metal foil including copper, a copper alloy, nickel, or a nickel alloy. The first electrode plate 10a may include a first electrode tab 10g (e.g., a first uncoated portion), which is a region to which the first electrode active material is not applied. The first electrode tab 10g may be connected to an external first terminal. In some embodiments, when the first electrode plate 10a is manufactured, the first electrode tab 10g may be formed by being cut in advance to protrude to or protrude from one side of the electrode assembly 10. In some embodiments, the first electrode tab 10g may protrude to or protrude from one side of the electrode assembly 10 farther than or beyond the separator 10c without being separately cut.

The second electrode plate 10e may be formed by applying (e.g., coating or depositing) a second electrode active material, such as a transition metal oxide, onto a second electrode substrate formed of a metal foil including aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to or protrude from the other side (e.g., the opposite side) of the electrode assembly 10 when the second electrode plate 10e is manufactured. In some embodiments, the second electrode plate 10e may protrude to or protrude from the other side of the electrode assembly farther than or beyond the separator 10c without being separately cut.

The separator 10c prevents a short-circuit between the first electrode plate 10a and the second electrode plate 10e while allowing migration of lithium ions therebetween. The separator 10c may include a polyethylene film, a polypropylene film, a polyethylene-polypropylene film, or the like.

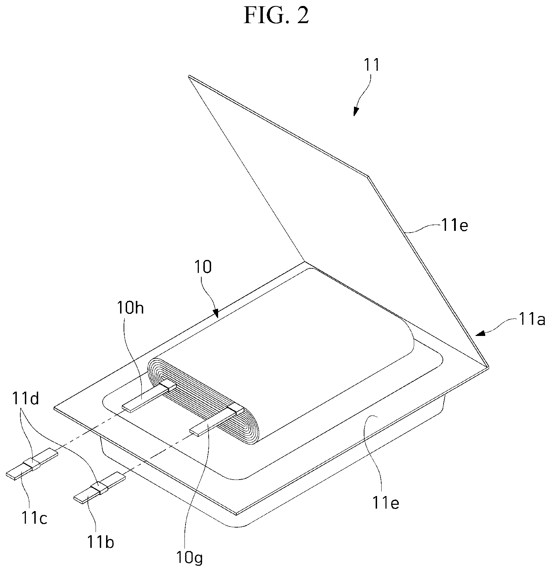

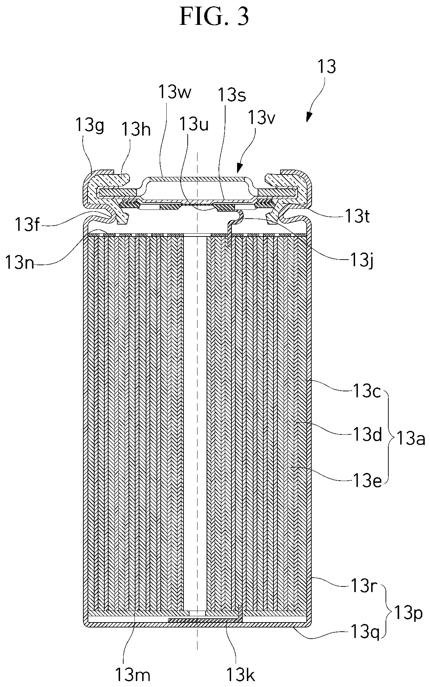

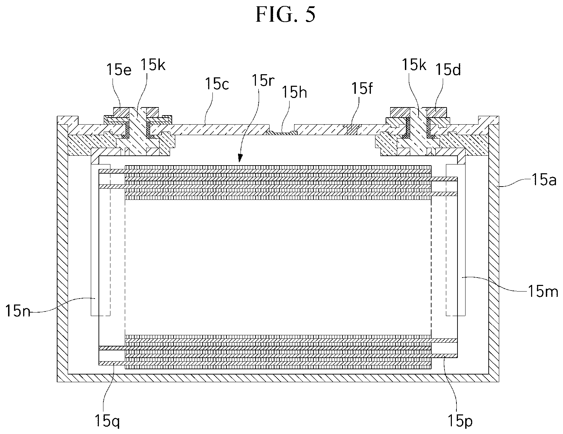

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 5).

The positive electrode active material may include a compound capable of reversibly intercalating/deintercalating lithium (e.g., a lithiated intercalation compound). In an embodiment, the positive electrode active material may include at least one of a composite oxide of lithium and a metal including cobalt, manganese, nickel, or combinations thereof.

The composite oxide may include a lithium transition metal composite oxide, such as a lithium nickel-based oxide, a lithium cobalt-based oxide, a lithium manganese-based oxide, a lithium iron phosphate-based compound, a cobalt-free nickel-manganese-based oxide, or a combination thereof.

In an embodiment, the composite oxide may include a compound represented by any one of the following formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{d}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8)where A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a substrate and a positive electrode active material layer positioned on the substrate. The positive electrode active material layer may include a positive electrode active material and may further include a binder and/or a conductive material.

The positive electrode active material may include about 90 wt% to about 99.5 wt% on the basis of 100 wt% of the positive electrode active material, and about 0.5 wt % to about 5 wt % of a binder, and about 0 wt % to about 5 wt % of a conductive material on the basis of 100 wt% of the positive electrode active material layer.

The substrate may include aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may include a carbon-based negative electrode active material including crystalline carbon, amorphous carbon, or a combination thereof. In an embodiment, the crystalline carbon may include graphite, such as natural graphite or artificial graphite, and the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may include silicon, a silicon-carbon composite, SiOₓ (0 < x ≤ 2), a Si-based alloy, or a combination thereof.

The silicon-carbon composite may include a composite of silicon and/or amorphous carbon. According to an embodiment, the silicon-carbon composite may exist in the form of a silicon particle and amorphous carbon with which the surface of the silicon particle is coated.

The silicon-carbon composite may further include crystalline carbon. In an embodiment, the silicon-carbon composite may include a core including crystalline carbon and silicon particles and an amorphous carbon coating layer on the surface of the core.

A negative electrode for a lithium secondary battery may include a substrate and a negative electrode active material layer positioned on the substrate. The negative electrode active material layer may include a negative electrode active material and may further include a binder and/or a conductive material.

The negative electrode active material layer may include about 90 wt % to about 99 wt % of a negative electrode active material, about 0.5 wt % to about 5 wt % of a binder, and about 0 wt % to about 5 wt % of a conductive material on the basis of 100 wt% of the negative electrode active material layer.

The binder may include a non-aqueous binder, an aqueous binder, a dry binder, or a combination thereof. When an aqueous binder is used as the negative electrode binder, a cellulose-based compound capable of enhancing viscosity may be further included.

The negative electrode substrate may include copper foil, nickel foil, stainless steel foil, titanium foil, nickel foam, copper foam, conductive metal-coated polymer substrate, or combinations thereof.

The electrolyte for a lithium secondary battery may include a non-aqueous organic solvent and/or a lithium salt.

The non-aqueous organic solvent is configured to serve as a medium through which ions involved in the electrochemical reaction of the battery can migrate.

The non-aqueous organic solvent may include a carbonate-based, an ester-based, an ether-based, a ketone-based, an alcohol-based solvent, an aprotic solvent, or combinations thereof.

In an embodiment, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). The separator may include polyethylene, polypropylene, polyvinylidene fluoride, or a multilayer film including two or more layers thereof.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles including Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or combinations thereof but is not limited thereto.

The organic material and the inorganic material may be combined into one coating layer or may be in the form of a coating layer including (or containing) an organic material and a coating layer including (or containing) an inorganic material where one coating layer is stacked onto the other.

FIG. 2 is a schematic view showing a pouch-type battery 11 to which the electrode assembly of FIG. 1 is applied according to embodiments of the present disclosure.

The pouch-type battery 11 includes an electrode assembly 10 and a pouch 11a that accommodates the electrode assembly 10.

A first electrode tab 10g and a second electrode tab 10h of the electrode assembly 10 may be electrically connected to respective external first terminal lead 11b and second terminal lead 11c by welding. Each of the first terminal lead 11b and the second terminal lead 11c may be attached with a tab film 11d for insulation from the pouch 11a.

The pouch 11a may be sealed by having sealing parts 11e at the edges thereof coming into contact with each other while accommodating the electrode assembly 10 therein. The sealing may be achieved with the tab film 11d interposed between the sealing parts 11e. The sealing parts 11e of the pouch 11a may each include a thermal fusion material that generally has weak adhesion to metal. Thus, the sealing parts 11e may be fused to the pouch 11a by interposing the thin tab film 11d between the sealing parts 21.

FIG. 3 illustrates a cylindrical secondary battery 13 according to embodiments of the present disclosure. An electrode plate of the cylindrical battery 13 may also be manufactured through the die apparatus.

The cylindrical battery 13 includes an electrode assembly 13a, a case 13p accommodating the electrode assembly 13a and the electrolyte, a cap assembly 13v coupled to an opening of the case 13p to seal the case 13p, and an insulating plate 13n positioned between the electrode assembly 13a and the cap assembly 13v inside the case 13p.

The electrode assembly 13a may include a separator 13d, a first electrode 13c, and a second electrode 13e. The separator 13d is interposed between the first electrode 13c and the second electrode 13e and may be wound in a jelly-roll shape.

The first electrode 13c includes a first substrate and a first active material layer on the first substrate. A first lead tab 13j may extend outwardly from a first uncoated portion of the first substrate where the first active material layer is not coated, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate where the second active material layer is not coated, and the second lead tab 13k may be electrically connected to the case 13p. The first lead tab 13j and the second lead tab 13k may extend in opposite directions.

The first electrode 13c may be configured to serve as a positive electrode. In an embodiment, the first substrate may include an aluminum foil, and the first active material layer may include a transition metal oxide. The second electrode 13e may be configured to serve as a negative electrode. In an embodiment, the second substrate may include a copper foil or a nickel foil, and the second active material layer may include graphite.

The separator 13d prevents a short circuit between the first electrode 13c and the second electrode 13e while allowing migration of lithium ions therebetween. The separator 13d may be include a polyethylene film, a polypropylene film, a polyethylene-polypropylene film, or the like.

The case 13p accommodates the electrode assembly 13a and the electrolyte, and together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) is recessed inwardly against the body portion 13r, and a crimping part 13g (e.g., a crimp) is bent inwardly at an open end of the body portion 13r.

The beading part 13f is configured to reduce or prevent any movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may include iron plated with nickel.

The cap assembly 13v may be fixed to the inside of the crimping part 13g via the gasket 13h to seal the case 13p. The cap assembly 13v may include a cap up 13w, a safety vent 13s, a cap down 13t, an insulating member, and a sub plate 13u but is not limited thereto and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch (not shown) may be formed in the safety vent around the protrusion part.

When gas is generated due to overcharging or abnormal operation of the secondary battery, the protrusion part is deformed upwardly by the gas pressure and separates from the sub plate 13u while the safety vent 13s is cut (e.g., bursts or tears) along the notch. The cut safety vent 13s may prevent the secondary battery from exploding by allowing for the gas to be discharged to the outside of the battery 13.

The cap down 13t may be located below the safety vent 13s. The cap down 13t may have a first opening for exposing the protrusion part of the safety vent 13 s and a second opening for gas discharge. The insulating member (not shown) may be positioned between the safety vent 13s and the cap down 13t to insulate the safety vent 13s and the cap down 13t.

The sub plate 13u may be located under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s, the cap down 13t, and the sub plate 13u may be electrically connected to the first electrode 13c of the electrode assembly 13a.

The insulating plate 13n may be positioned to be in contact with the electrode assembly 13a below the beading part 13. The insulating plate 13n may have a tab opening (not shown) through which the first lead tab 13j is drawn out. The cap assembly 13v, which is electrically connected to the first electrode 13c via the first lead tab 13j, is positioned opposite to the electrode assembly 13a via the insulating plate 13n interposed therebetween. The cap assembly 13v may maintain a state of being insulated (e.g., electrically insulated) from the electrode assembly 13a via the insulating plate. The battery 13 may include a second insulating plate 13m for insulating the electrode assembly 13a from the bottom portion 13q of the case 13p.

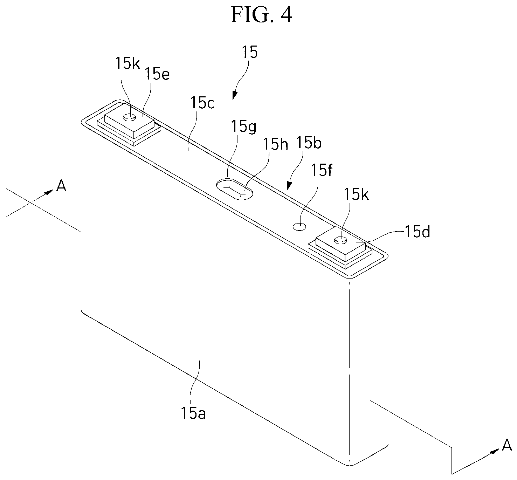

FIG. 4 is a top perspective view showing an exterior of a prismatic battery 15 according to embodiments of the present disclosure. An electrode plate built in the prismatic battery 15 can also be punched via the die apparatus.

A case 15a defines an overall appearance of the prismatic secondary battery, and may include a conductive metal, such as aluminum, aluminum alloy, or nickel-plated steel. The case 15a may provide a space for accommodating an electrode assembly.

A cap assembly 15b may include a cap plate 15c that covers the opening of the case 15a. In an embodiment, the case 15a and the cap plate 15c may include a conductive material. A first terminal 15d and a second terminal 15e may be electrically connected to respective positive and negative (or negative and positive) electrodes within the case, and may be installed to protrude outward through the cap plate 15c.

The cap plate 15c may be equipped with an electrolyte injection port 15f, a gas discharge hole 15g, and a gas discharge device 15h that may be coupled to the gas discharge hole 15g. The gas discharge device 15h can be open by gas generated inside the battery performing a degassing operation.

FIG. 5 is a cross-sectional view taken along the line A-A of FIG. 4, according to embodiments of the present disclosure. The internal structure of the prismatic secondary battery and the coupling structure with the cap assembly 15b is described with reference to FIG. 5.

In some embodiments, the electrode assembly 15r may be formed by winding a first electrode plate, a separator, and a second electrode plate formed in a plate or sheet shape. When the electrode assembly 15r is a wound stack, a winding axis may be parallel to the longitudinal direction of the case. In some embodiments, the electrode assembly 15r is a stacked type. The shape of the electrode assembly 15r is not limited in the present disclosure.

In an embodiment, the electrode assembly 15r may be a Z-stack electrode assembly in which a positive electrode plate and a negative electrode plate are inserted into both sides of a separator, which is then bent into a Z-stack. In an embodiment, one or more electrode assemblies 15r may be stacked such that longitudinal sides of the electrode assemblies are adjacent to each other and accommodated in the case. The number of electrode assemblies in the case is not limited in the present disclosure. The first electrode plate of the electrode assembly 15r may be configured as a negative electrode and the second electrode plate may act as a positive electrode, and vice versa.

The first electrode plate may be formed by applying a first electrode active material, such as graphite, carbon, or the like, to a first electrode current collector formed of a metal foil including copper, a copper alloy, nickel, a nickel alloy, or the like. The first electrode plate may include a first electrode tab 43 (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to or protrude from one side of the electrode assembly 15r. In some embodiments, the first electrode tab 15p may protrude to or protrude from one side of the electrode assembly 15r farther than or beyond the separator without being separately cut.

The second electrode plate may be formed by applying a second electrode active material, such as a transition metal oxide, on a second electrode current collector formed of a metal foil including aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to or protrude from the other side (e.g., the opposite side) of the electrode assembly when the second electrode plate is manufactured. In some embodiments, the second electrode plate may protrude to or protrude from the other side of the electrode assembly farther than or beyond the separator without being separately cut.

The separator prevents or substantially reduces instances of a short circuit between the first electrode and the second electrode while allowing migration of lithium ions therebetween. The separator may include a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

The first current collector 15m and the second current collector 15n are connected to the first terminal 15d and the second terminal 15e through connection members 15k, respectively. In some embodiments, the connection members 15k may each have an outer peripheral surface that is threaded, and may be fastened to the first terminal 15d and the second terminal 15e by screwing. However, the present disclosure is not limited thereto. In an embodiment, the connection members 15k may also be coupled to the first terminal 15d and the second terminal 15e by riveting or welding.

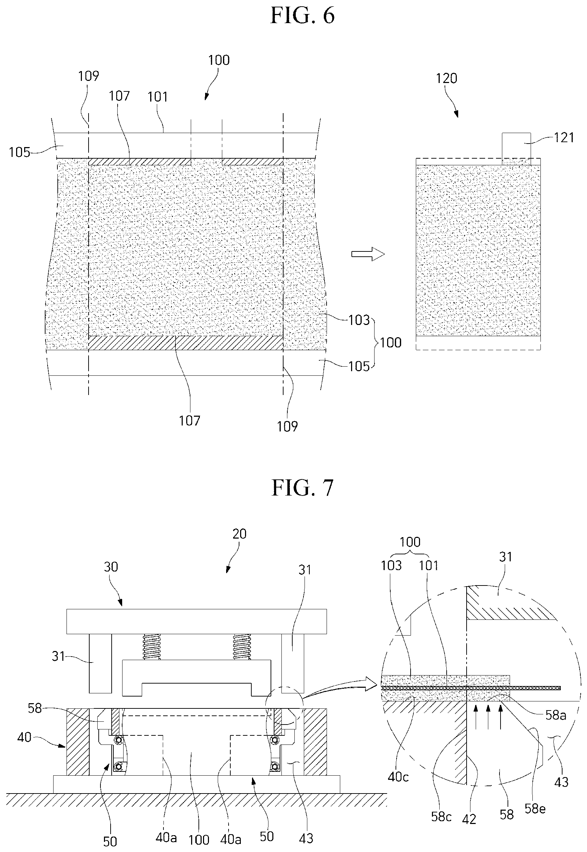

FIG. 6 is a schematic view showing the notching process and shows shapes of an electrode plate 100 before notching and an electrode plate 120 after notching according to embodiments of the present disclosure. The electrode plate 100 is a processing target coated with an active material on a substrate 101 and is wound in a roll with a predetermined width. When the electrode plate 100 is transported and notched, the electrode plate 120 is obtained.

The substrate 101 coated with the active material may be cut along a transverse cutting line 109 in the notching process and may also be cut along another cutting line 107. An uncoated portion 105 may be removed and trimmed during the cutting.

The notched electrode plate 120 has an area coated with a positive or negative electrode material and a tab 121 that is an uncoated area as illustrated at the right hand side of FIG. 6. The tab 121 is a part in which a conductive member such as a current collector or a sub-plate is joined in a subsequent electrode assembly process.

FIG. 7 is shows a structure of the die apparatus 20 for manufacturing a secondary battery according to embodiments of the present disclosure. The die apparatus 20 for manufacturing a secondary battery is intended to punch the supplied electrode plate 100 (see FIG. 6) to manufacture the electrode plate 120 (see FIG. 6). A basic structure of the electrode plate 100 includes a substrate 101 and an active material coated to the substrate 101. A portion coated with the active material is referred to as a coated portion 103, and a portion which is not coated with the active material and but exposed is referred to as an uncoated portion.

In an embodiment, the electrode plate 100 for a secondary battery is punched through a punch and die apparatus 20. In particular, a knockout unit 50 is applied to the punch and die apparatus 20.

The die apparatus 20 may include a lower die 40, an upper die 30, and a knockout unit 50.

The lower die 40 may horizontally support the electrode plate for a secondary battery to be notched. In addition, one or more scrap discharge holes 43 may be positioned in the lower die 40. The scrap discharge hole 43 is a passage where scrap generated during punching (that is, a removal portion removed from the electrode plate) is discharged downward. The removal portion may be an external area of the cutting lines 107 and 109 shown in FIG. 6.

A planar shape of the scrap discharge hole 43 may correspond to a shape of the cutting line 107. The shape of the scrap discharge hole 43 may vary depending on the shape of the electrode plate 120 to be manufactured. Portions to be punched of the electrode plate 100 seated on the lower die 40, that is, parts of the uncoated portion 105 and the coated portion 103, are positioned above the scrap discharge hole 43.

A lifting guide surface 42 may be formed on an inner wall surface of the scrap discharge hole 43. The lifting guide surface 42 is a guide surface that guides the vertical movement of a pad 58. The lifting guide surface 42 may be perpendicular to a horizontal plane and guide the vertical movement of the pad 58. **In** an embodiment, an uneven structure having a predetermined vertical cross section shape may be additionally applied to the lifting guide surface 42.

A unit accommodation space 40a may be formed in the lower die 40. The unit accommodation space 40a is a space in which a part of the knockout unit 50 may be accommodated. The unit accommodation space 40a may open toward the scrap discharge hole 43.

The upper die 30 may be installed to vertically move above the lower die 40 and have one or more punches 31. The punch 31 may be positioned vertically above the scrap discharge hole 43 and correspond to the scrap discharge hole 43. A cross-sectional shape of the punch 31 may be substantially the same as a planar shape of an internal space of the scrap discharge hole 43. The punch 31 may shear a punching target of the electrode plate 100 while entering the scrap discharge hole 43.

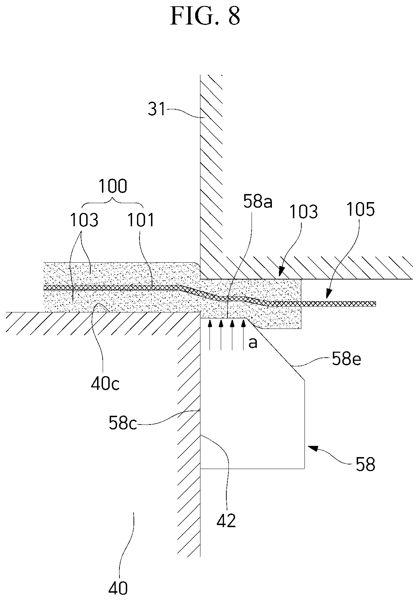

The knockout unit 50 may elastically support a portion punched by the punch 31 at the moment of punching, that is, a bottom surface of the removal portion removed from the electrode plate 100. More specifically, as shown in FIG. 8, a bottom surface of the coated portion 103 of the removal portion may be elastically supported in a direction of arrow a.

A support force in the direction of arrow a may be a reaction force corresponding to a downward pressure of the punch 31. The reaction force may be an elastic force output from an elastic support part inside the knockout unit 50.

The knockout unit 50 is installed on the die apparatus 20 that has the upper die 30 and the lower die 40 and may apply a reaction force corresponding to the downward pressure of the punch 31 when the punch moves downward to the bottom surface of the electrode plate 100 on the scrap discharge hole so that the electrode plate may be compressed in the vertical direction.

The knockout unit 50 may include the pad 58 and a pad support (not shown). The pad 58 is a member installed to be vertically movable in the scrap discharge hole 43. The pad 58 may be a bar-shaped member that horizontally extends linearly. A pressing surface portion 58a, a slider portion 58c, and a discharge inclined surface portion 58e may be formed on the pad 58.

The pressing surface portion 58a may be a flat portion that has a predetermined width and is formed at the top of the pad 58. As shown in FIG. 8, the pressing surface portion 58a is a portion that may be in contact with the bottom surface of the coated portion 103 of the removal portion to press and support the coated portion in the direction of arrow a. The pressing surface portion 58a may be horizontal.

The slider portion 58c is a portion supported by the lifting guide surface 42. The slider portion 58c may be in contact with the lifting guide surface 42. The slider portion 58c may vertically move while in contact with the lifting guide surface 52. In particular, a constant gap between the slider portion 58c and the lifting guide surface 42 may be maintained. Therefore, the pad 58 is not separated from the lifting guide surface 42 while vertically moving.

The discharge inclined surface portion 58e is an inclined surface that guides discharge of the punched scrap. The scrap discharged from the electrode plate 100 may be discharged more smoothly through the discharge inclined surface portion 58e.

The pad support may support the pad 58 upward in the direction of arrow a. When the punch 31 moves downward, the pad support may apply a reaction force corresponding to the downward pressure of the punch to the bottom surface of the electrode plate.

FIGS. 8 to 10 sequentially show a process of punching the electrode plate 100 using the die apparatus shown in FIG. 7 according to embodiments of the present disclosure. For convenience, the pad support is omitted in the drawings.

FIG. 8 shows the punch 31 moving downward and starting to punch the removal portion. The punch 31 is moving downward while pressing an upper surface of the coated portion 103. The pad 58 supports the bottom surface of the coated portion 103 in the direction of arrow a. The removal portion interposed between the punch 31 and the pad 58 is compressed in the thickness direction.

By adapting the pad 58, a portion to be removed from the electrode plate 100 is thinner than the other portions and may be punched in a thinner manner. Since the removal portion is compressed, shearing support force of the substrate 101 can be increased, pushing may not occur, and a precise sheared surface can be obtained. In an embodiment, a torn mark or a strand, thinner than a thread, does not form.

If the pad is not applied, the removal portion is sheared while sagging, and thus a sheared surface after the punching may not be vertical. In an embodiment, the sheared surface may not be perpendicular to the horizontal plane but may be tilted in an oblique direction, and may not result in a clean cut.

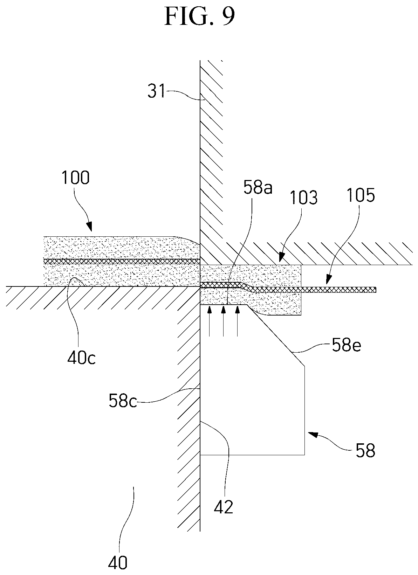

FIG. 9 shows the punch 31 further moving downward, the substrate 101 is sheared, and an active material above and under the substrate is about to be cut off. Since the pad 58 continuously supports the bottom surface of the removal portion, the removal portion does not sag downward, and thus precise shearing can be obtained. As the punch 31 moves downward, the compressed removal portion and the pad 58 also move downward at the same time.

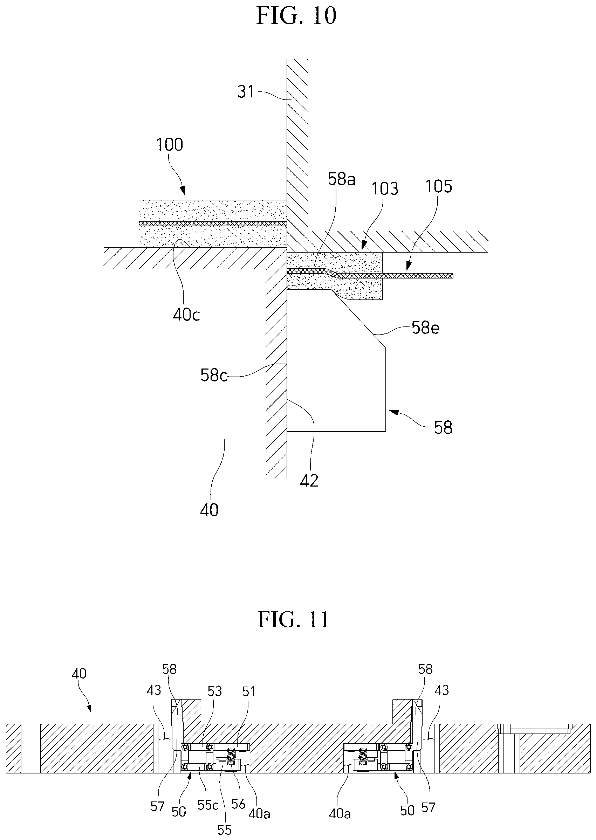

FIG. 10 shows the removal portion after shearing is completed. When the punch 31 moves upward after the shearing of the removal portion is completed, the removal portion falls downward due to gravity, and the pad 58 moves upward and returns to its original position. The height of the original position of the pad 58 may be a point at which the pressing surface portion 58a shares the same plane as a support surface 40c.

FIG. 11 is a partial cross-sectional view for describing a mounting structure of the knockout unit 50 applied to the lower die 40 of FIG. 7 according to embodiments of the present disclosure.

The unit accommodation space 40a may be formed in the lower die 40. The unit accommodation space 40a is a space in which a part of the knockout unit 50 is accommodated and may open to the scrap discharge hole 43.

The pad support may include a shaft 57, a link mechanism, and an elastic support. The shaft 57 may be a member that is fixed to a lower portion of the pad and extends downward inside the scrap discharge hole 43. The link mechanism may be installed inside the unit accommodation space 40a and linked to the shaft 57, thereby implementing the vertical movement of the shaft 57. The elastic support may provide an elastic force to the link mechanism to elastically support the shaft upward.

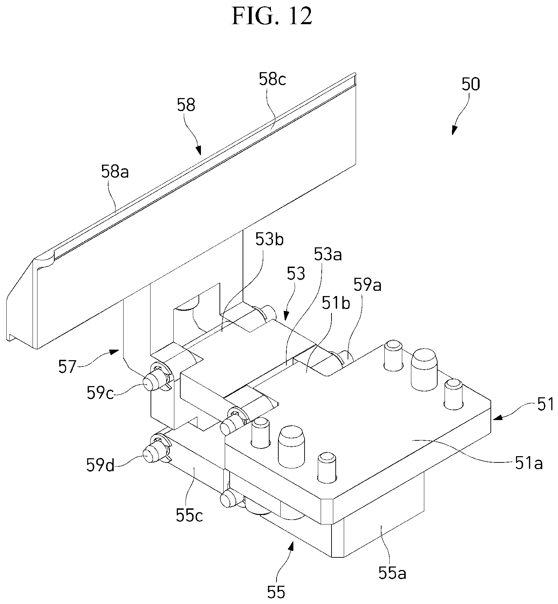

FIGS. 12 to 15 show a configuration of the knockout unit 50 according to embodiments of the present disclosure.

The pad 58 may be a bar-shaped member extending horizontally. The aforementioned pressing surface portion 58a is formed on an upper end portion of the pad 58, and the slider portion 58c is provided on a front surface of the pad 58. The discharge inclined surface portion 58e is formed at a side opposite to the slider portion 58c. The pad 58 may elastically support the removal portion of the electrode plate.

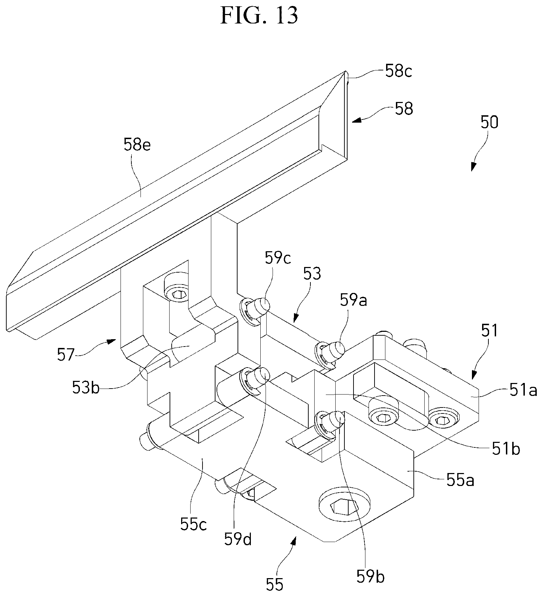

The shaft 57 is a member fixed to the lower portion of the pad 58 and may extend downward and have a groove 57a in a central portion thereof. The groove 57a is a space in which a protrusion 53b of an Alink 53 may be accommodated. In addition, pin holes 57d may be formed in upper and lower portions of the shaft 57. As shown in FIG. 13, a third link pin 59a may be fitted into the upper pin hole 57d, and a fourth link pin 59b may be fitted into the lower pin hole 57d.

The link mechanism may include the Alink 53, a B link 55, a link body 51, and first, second, third, and fourth link pins.

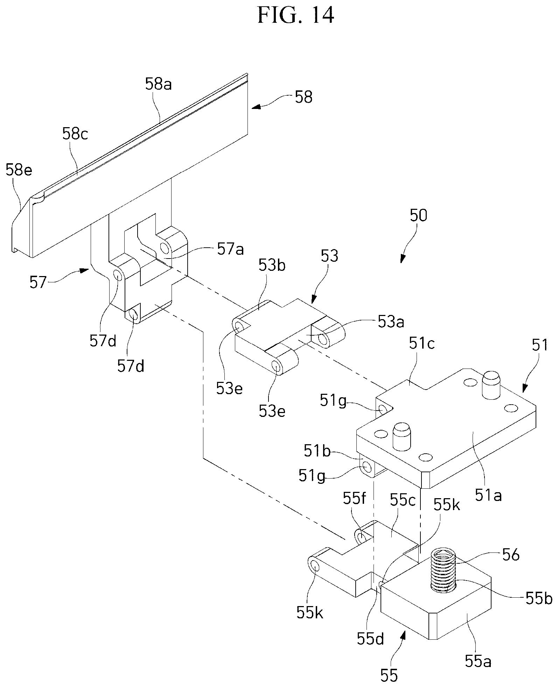

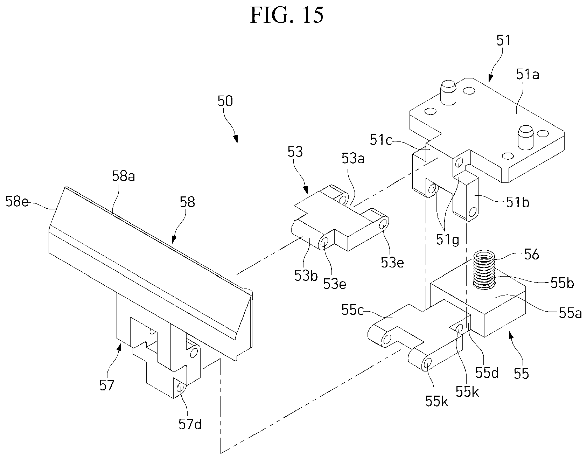

As shown in FIGS. 14 and 15, the A link 53 may have a substantially flat shape and include the protrusion 53b and a groove 53a. The protrusion 53b may be inserted into the groove 57a of the shaft 57, and the groove 53a may accommodate a bent portion 51c of the link body 51. A pin hole 53e may be formed at both end portions of the A link 53.

The pin hole 53e formed in the protrusion 53b may allow the first link pin 59c to pass therethrough. When the first link pin 59c is fitted while the protrusion 53b is fitted into the groove 57a, the A link 53 may be connected to the shaft 57. When the third link pin 59a is mounted while the bent portion 51c is fitted into the groove 53a, the link body 51 may be connected to the A link 53.

The Blink 55 is a member installed parallel to a lower portion of the A link 53. The B link 55 may include a spring support 55a, an extension 55d, and a connection portion 55c. The spring support 55a may have a spring support groove 55b in an upper surface thereof. A B link spring 56 as an elastic support may be mounted in the spring support groove 55b.

The extension 55d is a portion that connects the connection portion 55c to the spring support 55a and may have a pin hole 55k. When a pin hole 51g at the bottom of a vertical support 51b is aligned with the pin hole 55k and then the fourth link pin 59b is fitted into the pin hole 51g and the pin hole 55k, the B link 55 may be connected to the link body 51.

The connection portion 55c is a portion that accommodates a lower end portion of the shaft 57 and has the pin hole 55k. When the pin hole 57d of the shaft is aligned with the pin hole 55k and then the second link pin 59d is fitted into the pin hole 57d and the pin hole 55k, the B link 55 may be connected to the shaft 57.

The link body 51 may be fixed in the unit accommodation space 40a, connected to the A link 53 and the B link 55 using the third and fourth link pins 59a and 59b, and may maintain a parallel state of the A link and the B link. The link body 51 may include a die coupling portion 51a, the bent portion 51c, and the vertical support 51b. The die coupling portion 51a is a portion that is bolted to a ceiling surface of the unit accommodation space 40a. A bottom surface of the die coupling portion 51a may be in contact with an upper end portion of the B link spring 56.

The vertical support 51b is a portion that is bent perpendicularly to the die coupling portion 51a and has the pin holes 51g in upper and lower portions thereof. The third link pin 59a may be fitted into the upper pin hole, and the fourth link pin 59b may be fitted into the lower pin hole.

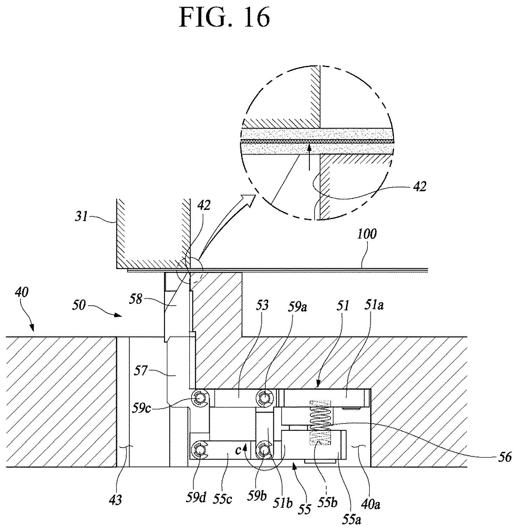

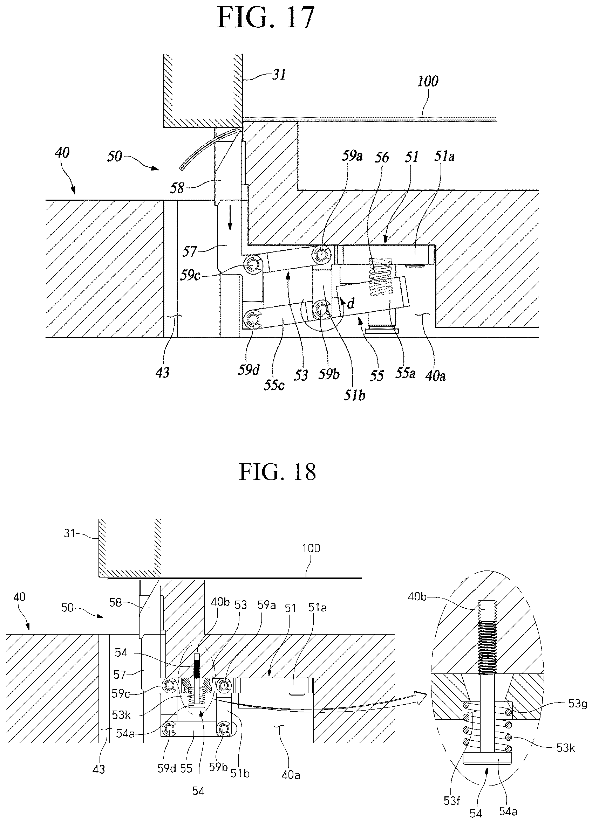

FIGS. 16 and 17 show operations of the knockout unit illustrated in FIG. 12 according to embodiments of the present disclosure.

As shown in FIG. 16, the B link spring 56 is an elastic support that supports the B link 55 in a direction of arrow c while being installed between the die coupling portion 51a and the spring support 55a. As shown in FIG. 17, the B link spring 56 may be compressed when the pad 58 moves downward. When a pressure applied to the pad 58 is removed, the pad 58 is restored elastically.

As illustrated in FIG. 16, the electrode plate 100 is loaded into the lower die 40, and a lower end portion of the punch 31 is in contact with an upper surface of the removal portion of the electrode plate 100. The B link 55 is elastically biased in the direction of arrow c by the operation of the B link spring 56, and the shaft 57 connected to the B link 55 waits in an elevated state. The reason that the shaft 57 no longer moves upward is because the A link 53 is caught on the ceiling surface of the unit accommodation space 40a and may not rotate upward.

When the punch 31 moves downward in such a waiting state, the pad 58 and the shaft 57 are moved downward vertically by the downward pressure of the punch 31. Since the shaft 57 is linked to the end portions of the A link 53 and the B link 55 that always maintain the parallel state, the shaft may always maintain the vertical state regardless of upward and downward movements.

When the shaft 57 moves downward, the B link 55 rotates in a direction of the arrow d as illustrated in FIG. 17. At this time, the A link 53 also rotates, and the B link spring 56 is compressed. Subsequently, when the punch 31 moves upward, the A link 53 and the B link 55 are rotated by an elastic restoring force of the B link spring 56 and move the shaft 57 upward.

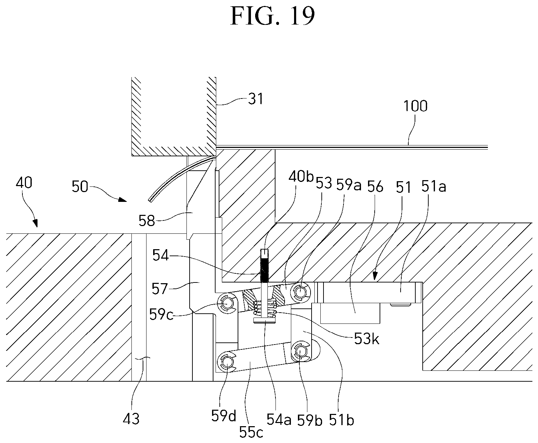

FIGS. 18 and 19 show a knockout unit 50 according to embodiments of the present disclosure. The spring support 55a and the B link spring 56 of the B link are omitted.

A link hole 53f may be formed in the A link 53. The link hole 53f is a hole that vertically passes through the A link 53 in the thickness direction and may have a stopper 53g in an inner circumferential surface thereof.

A female screw hole 40b is provided in the lower die 40. The female screw hole 40b is a female screw hole corresponding to the link hole 53f and may open toward the link hole 53f. The knockout unit 50 according to another embodiment may include a through screw 54 and an A-link spring 53k.

The through screw 54 is a component that passes through the link hole 53f and is screw-coupled to the female screw hole 40b. The through screw 54 may have a disc-shaped head portion 54a. A diameter of the head portion 54a may be greater than an inner diameter of the link hole 53f. The A-link spring 53k is a spring that is pressed by the through screw 54 to elastically support the A-link upward. One end portion of the A-link spring 53k is caught on the stopper 53g, and the other end portion may be in contact with the head portion 54a of the through screw. **In** particular, by adjusting the degree of screw coupling of the through screw 54 with respect to the female screw hole 40b, the upward elastic support strength of the pad 58 may be adjusted.

Advantageously, shearing support force of an electrode plate can be increased by holding and compressing a processing target upon punching processing for the processing target, thereby providing products with accurate dimensions without punching defects.

Although the present disclosure has been described above with respect to embodiments thereof, the present disclosure is not limited thereto. Various modifications and variations can be made thereto by those skilled in the art within the scope of the present disclosure.

## Claims

1. An apparatus, comprising:
a lower die configured to support an electrode plate, the lower die comprising a scrap discharge hole;
an upper die positioned above the lower die, the upper die comprising a punch corresponding to the scrap discharge hole; and
a knockout unit comprising:
a pad configured to be vertically movable within the scrap discharge hole; and
a pad support configured to support the pad upward and to allow the pad to apply a reaction force corresponding to a downward pressure of the punch to a bottom surface of the electrode plate upon the punch moving downward.

2. The apparatus as claimed in claim 1, wherein the pad comprises a pressing surface portion configured to press the bottom surface of the electrode plate.

3. The apparatus as claimed in claim 2, wherein a lifting guide surface is positioned on an inner wall surface of the scrap discharge hole, the lifting guide surface configured to guide vertical movement of the pad, and
wherein the pad further comprises a slider portion supported by the lifting guide surface.

4. The apparatus as claimed in claim 1, 2 or 3, wherein the lower die further comprises a unit accommodation space opening toward the scrap discharge hole and accommodating a part of the knockout unit.

5. The apparatus as claimed in claim 4, wherein the pad support comprises:
a shaft fixed to a lower portion of the pad within the scrap discharge hole and extending downward;
a link mechanism positioned inside the unit accommodation space and linked to the shaft, the link mechanism implementing vertical movement of the shaft; and
an elastic support configured to provide an elastic force to the link mechanism to support the shaft upward.

6. The apparatus as claimed in claim 5, wherein the link mechanism comprises:
an A link and a B link each connected to an upper portion and a lower portion of the shaft in a vertical direction via a link pin and extend toward the unit accommodation space; and
a link body positioned in the unit accommodation space and connected to the A link and the B link via the link pin, the link body configured to maintain the A link and the B link to be parallel to each other.

7. The apparatus as claimed in claim 5 or 6, wherein the A link comprises a link hole vertically passing through the A link,
wherein the lower die further comprises a female screw hole corresponding to the link hole, and
the elastic support comprises a through screw coupled to the female screw hole through the link hole and comprises an A-link spring pressed by the through screw to elastically support the A link upward.

8. A knockout unit for an apparatus comprising a lower die and an upper die, the lower die configured to support an electrode plate, the lower die comprising a scrap discharge hole, the upper die positioned above the lower die, and the upper die comprising a punch corresponding to the scrap discharge hole, wherein the knockout unit is configured to apply a reaction force corresponding to a downward pressure of the punch to a bottom surface of the electrode plate upon the punch moving downward.

9. The knockout unit as claimed in claim 8, comprising:
a pad configured to be vertically movable within the scrap discharge hole; and
a pad support configured to support the pad upward and allow the pad to apply the reaction force.

10. The knockout unit as claimed in claim 9, wherein the electrode plate comprises a coated portion in which a substrate is coated with an active material and an uncoated portion in which the substrate is exposed, and
wherein an upper end portion of the pad comprises a pressing surface portion configured to be in contact with a bottom surface of the coated portion and configured to press the coated portion.

11. The knockout unit as claimed in claim 10, wherein a lifting guide surface is positioned on an inner wall surface of the scrap discharge hole, the lifting guide surface configured to guide vertical movement of the pad, and
wherein the pad further comprises a slider portion supported by the lifting guide surface.

12. The knockout unit as claimed in claim 9, 10 or 11, wherein the lower die further comprises a unit accommodation space opening toward the scrap discharge hole accommodating a part of the knockout unit.

13. The knockout unit as claimed in claim 12, wherein the pad support comprises:
a shaft fixed to a lower portion of the pad within the scrap discharge hole and extending downward;
a link mechanism positioned inside the unit accommodation space and linked to the shaft, the link mechanism implementing a vertical movement of the shaft; and
an elastic support configured to provide an elastic force to the link mechanism to support the shaft upward.

14. The knockout unit as claimed in claim 13, wherein the link mechanism comprises:
an A link and a B link each connected to an upper portion and a lower portion of the shaft in a vertical direction via a link pin and extend toward the unit accommodation space; and
a link body positioned in the unit accommodation space and connected to the A link and the B link via the link pin, the link body configured to maintain the A link and the B link to be parallel to each other.

15. The knockout unit as claimed in claim 13 or 14, wherein the A link comprises a link hole vertically passing through the A link,
wherein the lower die further comprises a female screw hole corresponding to the link hole, and
the elastic support comprises a through screw coupled to the female screw hole through the link hole and comprises an A-link spring pressed by the through screw to elastically support the A link upward.
